# FASCICULE DE BREVET EUROPEEN

(11) **EP 1 120 190 B1**
(45) Date de publication et mention de la délivrance du brevet: **22.09.2004**
(21) Numéro de dépôt: 01400203.4
(22) Date de dépôt: 25.01.2001
(51) Int. Cl.: B23Q 17/00

(54) **Machine pneumatique d'usinage**
Pneumatische Werkzeugmaschine
Pneumatic machine tool

(30) Priorité: 28.01.2000 FR 0001154
(43) Date de publication de la demande: 01.08.2001
(73) Titulaire: Recoules S.A., 77330 Ozoir La Ferriere (FR)
(72) Inventeur: Desmoulins, Marcel, 77163 Mortcerf (FR)
(74) Mandataire: Domenego, Bertrand

(56) Documents cités:
- DE-A- 4 314 147
- US-A- 4 738 438

## Description

La présente invention se rapporte à une machine d'usinage pneumatique, particulièrement adaptée pour être utilisée dans l'industrie aéronautique.

Les machines pneumatiques sont largement répandues et sont souvent préférées à des machines à entraînement électrique en raison de leurs performances.

On connaît, dans l'état de la technique, une machine pneumatique d'usinage, du type comprenant une broche télescopique porte-outil comportant un arbre menant entraîné en rotation par un moteur pneumatique, et sur lequel est monté à coulissement un arbre creux auquel est associé un porte-outil et entraîné en translation par un moyen de commande comprenant un chariot entraîné en translation par une vis sans fin par l'intermédiaire d'une noix portée par le chariot, ladite vis sans fin étant entraînée en rotation par un moteur électrique.

Ce type de machine est souvent doté d'une bague permettant le verrouillage de la machine sur une grille d'usinage.

Après montage de la machine sur cette grille, une unité centrale équipant la machine provoque l'actionnement du moteur électrique de manière à lancer une phase d'approche rapide de l'outil jusqu'à ce que ce dernier vienne en contact avec la pièce à usiner.

Cette phase se poursuit par une phase d'usinage proprement dite. Enfin, après usinage, le cycle est achevé.

Il existe à ce jour différentes techniques permettant la détection de la fin de l'usinage.

En particulier, la détection du perçage peut s'effectuer en mesurant l'intensité du courant consommé par le moteur électrique. Cette technique est inefficace dans certains cas, dans la mesure où elle ne peut être mise en oeuvre lorsque le moteur électrique est un moteur de type pas à pas.

Il est également possible de détecter la fin du perçage de la pièce en détectant une augmentation de la vitesse de rotation de l'arbre moteur de la machine. Cette technique présente un certain nombre d'inconvénients notamment en raison du fait qu'elle ne permet pas de fournir une information précise dans la mesure où la vitesse de rotation de l'arbre varie en fonction d'un grand nombre de paramètres, par exemple en fonction de la quantité de lubrifiant placé sur la pièce.

Le but de l'invention est de pallier les inconvénients de l'état de la technique.

Elle a donc pour objet une machine pneumatique d'usinage, comprenant une broche télescopique comportant un arbre menant entraîné en rotation par un moteur pneumatique et sur lequel est monté à coulissement un arbre creux auquel est associé un porte-outil et entraîné en translation par des moyens de commande comprenant un chariot entraîné en translation par une vis sans fin par l'intermédiaire d'une noix portée par le chariot, ladite vis sans fin étant entraînée en rotation par un moteur électrique, caractérisée en ce que le chariot est doté d'un capteur de force adapté pour la mesure de la poussée exercée sur le porte-outil et raccordé à une unité centrale de traitement dans laquelle est stocké un algorithme de traitement du signal délivré par le capteur et de contrôle de l'avance de l'outil porté par la broche.

La machine pneumatique d'usinage peut en outre comporter une ou plusieurs des caractéristiques suivantes, prises isolément ou selon toutes les combinaisons techniquement possibles :
- l'algorithme de traitement comporte des moyens logiciels de calcul de la différence entre le signal délivré par le capteur et une valeur de seuil de poussée correspondant à une valeur minimale de poussée exercée au cours de l'usinage d'une pièce,
- les moyens de calcul constituent des moyens de détection de l'évolution du perçage d'une pièce en cours d'usinage,
- le moteur électrique est un moteur électrique pas à pas, la machine comportant en outre un compteur de mesure du déplacement axial de l'outil, et l'unité centrale de traitement pilotant l'arrêt d'un cycle d'usinage en réponse à une détection d'une fin de perçage, dès que, après perçage, l'outil a avancé d'une distance prédéterminée,
- le capteur est monté entre un organe de blocage de la noix sur le chariot et la noix,
- le capteur est intégré à un organe de maintien de la noix sur le chariot,
- le capteur est monté entre un organe de maintien et le chariot,
- le capteur est constitué par une jauge de contrainte,
- le capteur est constituée par un capteur piézo-électrique,
- le capteur est monté dans un pont de Wheatstone.

D'autres caractéristiques et avantages ressortiront de la description suivante, donnée uniquement à titre d'exemple, et faite en référence aux dessins annexés sur lesquels :
- La figure 1 est une vue en coupe transversale partielle d'une machine d'usinage selon l'invention ;
- La figure 2 est une vue schématique partielle d'une variante de la machine d'usinage de la figure 1 ; et
- La figure 3 illustre la variation du signal délivré par le capteur de force, en fonction du temps.

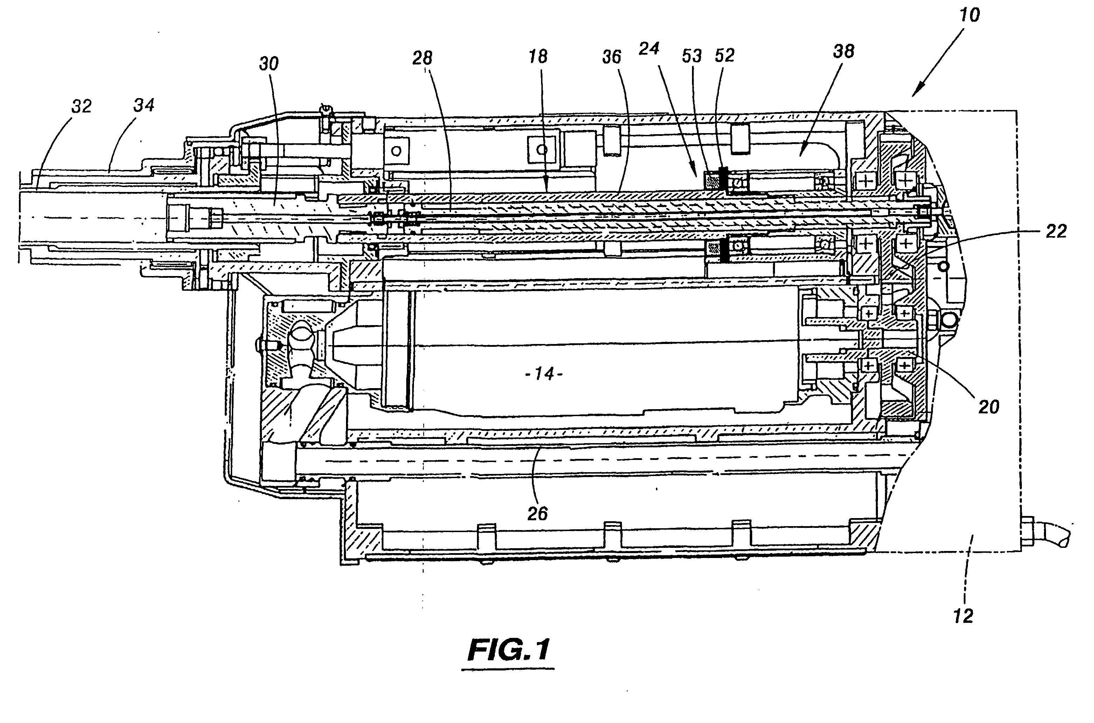

Sur la figure 1, on a représenté une vue en coupe d'une machine pneumatique d'usinage conforme à l'invention, désignée par la référence numérique générale 10.

La machine 10 comporte, placés à l'intérieur d'un carter 12: un moteur pneumatique 14 alimenté en air comprimé et connecté à une source d'alimentation appropriée; une broche porte-outil 18 télescopique; et des moyens 24 de commande de l'extension axiale de la broche porte-outil 18.

Le moteur pneumatique 14 et les moyens de commande de l'extension axiale de la broche 18 sont raccordés à une unité centrale de traitement (non visible sur cette figure) placée sur une carte de circuit intégré 26 et dans laquelle sont stockés un ou plusieurs algorithmes de pilotage de la machine, comme cela est classique.

La broche télescopique 18 comporte un arbre menant 28 fixe en translation axiale et entraîné en rotation par l'intermédiaire d'un jeu de pignons 20 et 22 par le moteur pneumatique 14, et un arbre creux 36 auquel est associé un porte-outil 30 doté de moyens permettant le montage d'un outil d'usinage (non représenté) et monté mobile en rotation et en translation.

Le déplacement axial de l'arbre creux 36 et du porte-outil 30 est piloté par les moyens de commande 24.

Par ailleurs, et comme cela est classique, la machine 10 est dotée d'un canon palpeur 32 associé à un vérin pneumatique pour transmettre une information précise quant à la position de l'outil par rapport à la pièce à usiner, cette information étant transmise à l'unité centrale de manière à permettre à la machine de corriger le déplacement en conséquence de l'arbre creux 36 et du porte-outil 30.

Le canon palpeur 32 est entouré par une bague 34 de verrouillage de la machine sur une grille d'usinage.

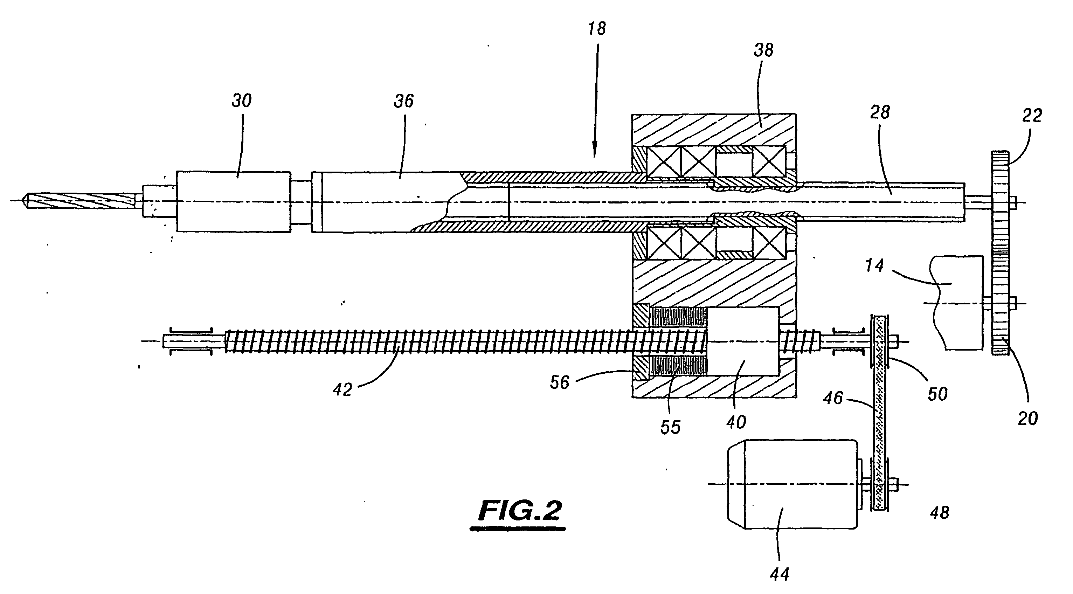

Les moyens de commande de l'extension axiale de la broche porte-outil 18 comportent l'arbre creux 36 et un chariot 38 doté d'une noix à recirculation de rouleaux visible sur la figure 2.

L'arbre 36 est entraîné en translation par le chariot 38 dont la noix 40 est traversée par une vis sans fin 42 entraînée en rotation par un moteur électrique 44, tel qu'un moteur pas à pas par exemple, par l'intermédiaire d'une courroie 46 et de poulies 48, 50. Le moteur électrique 44 est piloté par l'unité centrale.

Comme on le voit sur la figure 1, l'extrémité proximale du porte-outil 30 est solidaire en translation de l'arbre 36.

Ainsi, et comme on le conçoit, la mise en rotation de la vis sans fin 42 provoque, sous l'action de la noix 40 à recirculation de rouleaux, un déplacement consécutif en translation de l'arbre 36 et donc une avance du porte-outil 30.

Afin de contrôler l'avance du porte-outil 30 de la broche porte-outil 18, la machine 10 comporte, intégré au chariot 38, un capteur de force adapté pour mesurer l'effort de poussée exercé sur la broche télescopique 18 et, en particulier, sur le porte-outil 30.

Le capteur de force est raccordé à l'unité centrale de traitement de manière à fournir à cette dernière un signal de mesure de l'effort exercé.

Le capteur de force est, de préférence, constitué par une jauge de contrainte, de manière à fournir une indication relativement précise de l'effort exercé et ce, pour un coût réduit.

On conçoit cependant que, si l'on souhaite obtenir une précision accrue, la jauge de contrainte peut être remplacée par un capteur piézo-électrique.

Comme on le voit sur la figure 1, un capteur de force 52 est, par exemple, interposé entre un organe de maintien 53 et le chariot 38.

Dans le mode de réalisation de la figure 2, un capteur de force 55 est disposé entre la noix 40 portée par le chariot 38 et un organe de blocage 56 de la noix sur le chariot 38.

Plus précisément, le capteur de force 52 est monté dans un pont de Wheaststone, de type classique (non représenté), et fournit ainsi à l'unité centrale de traitement une tension représentative de l'effort exercé sur la broche télescopique 18 et sur le porte-outil 30.

Le moteur électrique 44 entraînant en rotation la vis sans fin 42 (Fig.2) est constitué par un moteur électrique pas à pas.

Il est associé à un compteur s'incrémentant à chaque rotation de la vis sans fin 42 et donnant ainsi une indication sur le déplacement axial de l'outil.

Par exemple, pour le perçage, la vitesse d'avance de l'outil est linéaire et varie entre 0 et 700mm/min.

Ceci permet de fournir une indication exacte de la profondeur de perçage et de la contrôler en permanence. Il est ainsi possible d'avancer plus ou moins rapidement dans un matériau donné, de faire des cycles de débourrage, d'effectuer des opérations ponctuelles de sortie de broche sans rotation, ...

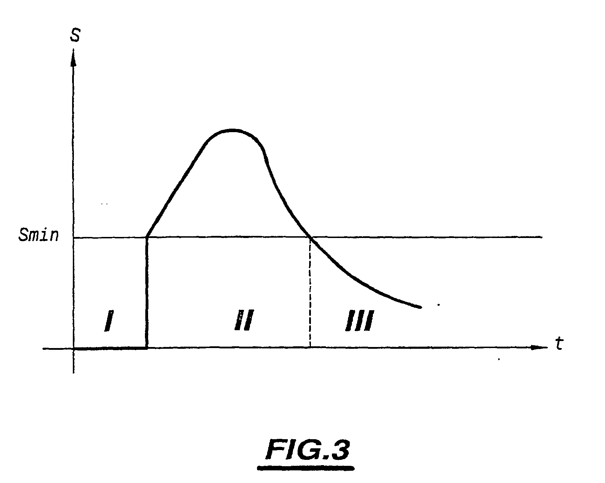

La technique mise en oeuvre au sein de la machine 10 qui vient d'être décrite va maintenant être exposée en référence à la figure 3, dans le cas du perçage d'une pièce.

Tout d'abord, au cours d'une première phase I, le moteur électrique pas à pas 44 est activé de manière à procéder à une phase d'approche rapide sans attaque de la pièce à percer.

Au cours de cette phase I, le signal S délivré par le capteur de force 52 ou 55 est sensiblement nul.

A l'issue de cette phase I préalable, la phase II ultérieure correspond à l'usinage proprement dit de la pièce.

On notera que cette phase débute alors que le signal S délivré par le capteur 52 ou 55 dépasse une valeur de seuil Sₘᵢₙ qui correspond à une valeur minimale de poussée exercée au cours de l'usinage d'une pièce.

Par exemple, cette valeur Sₘᵢₙ correspond à un effort de 20Kg pour un perçage d'un orifice de diamètre 7mm.

On notera que dès que le signal S dépasse cette valeur de seuil Sₘᵢₙ, traduisant que la machine est en mode d'avance travail, l'unité centrale procède au traitement proprement dit du signal S de manière à procéder au contrôle de l'avance de l'outil.

Plus spécifiquement, pour détecter la fin du perçage de la pièce, l'unité centrale détecte l'instant où le signal S passe à nouveau en dessous de cette valeur Sₘᵢₙ, ce qui correspond à la fin du perçage de la pièce.

Dès que la fin du perçage a été détectée, l'unité centrale de traitement lit la valeur de comptage du compteur puis procède à un arrêt du cycle d'usinage dès que, après perçage, l'outil a avancé d'une distance prédéterminée, par exemple de 10mm.

On conçoit que l'invention qui vient d'être décrite, qui utilise, pour le contrôle de l'avance de l'outil, un capteur de force associé à une noix provoquant l'avance de l'outil, permet de fournir une indication précise de la fin de l'usinage d'une pièce et donc d'optimiser un cycle d'usinage pour une valeur de déplacement initiale.

On notera enfin que l'invention n'est pas limitée au mode de réalisation décrit.

En effet, dans la machine d'usinage décrite en référence à la figure 2, le capteur de force est interposé entre l'organe de maintien de la noix dans le chariot et la noix.

Il pourrait être également, en variante, intégré à l'organe de maintien lui-même.

## Revendications

1. Machine pneumatique d'usinage, comprenant une broche télescopique (18) comportant un arbre menant (28) entraîné en rotation par un moteur pneumatique (14) et sur lequel est monté à coulissement un arbre creux (36) auquel est associé un porte-outil (30) et entraîné en translation par des moyens de commande (24) comprenant un chariot (38) entraîné en translation par une vis sans fin (42) par l'intermédiaire d'une noix (40) portée par le chariot (38), ladite vis sans fin étant entraînée en rotation par un moteur électrique, **caractérisée en ce que** le chariot est doté d'un capteur de force (52; 55) adapté pour la mesure de la poussée exercée sur le porte-outil (30) et raccordé à une unité centrale de traitement dans laquelle est stocké un algorithme de traitement du signal délivré par le capteur et de contrôle de l'avance de l'outil porté par la broche.

2. Machine selon la revendication 1, **caractérisée en ce que** l'algorithme de traitement comporte des moyens logiciels de calcul de la différence entre le signal (S) délivré par le capteur (52 ; 55) et une valeur de seuil de poussée correspondant à une valeur minimale de poussée exercée au cours de l'usinage d'une pièce.

3. Machine selon la revendication 2, **caractérisé en ce que** les moyens de calcul constituent des moyens de détection de l'évolution du perçage d'une pièce en cours d'usinage.

4. Machine selon la revendication 3, **caractérisée en ce que** le moteur électrique est un moteur-électrique pas à pas, et **en ce qu'**elle comporte en outre un compteur de mesure du déplacement axial de l'outil, l'unité centrale de traitement pilotant l'arrêt d'un cycle d'usinage en réponse à une détection d'une fin de perçage, dès que, après perçage, l'outil a avancé d'une distance prédéterminée.

5. Machine selon l'une quelconque des revendications 1 à 4, **caractérisée en ce que** le capteur (55) est monté entre un organe (56) de blocage de la noix (40) sur le chariot (38) et la noix (40).

6. Machine selon l'une quelconque des revendications 1 à 4, **caractérisée en ce que** le capteur est intégré à un organe de maintien de la noix sur le chariot.

7. Machine selon l'une quelconque des revendications 1 à 4, **caractérisée en ce que** le capteur (52) est monté entre un organe de maintien (53) et le chariot (38).

8. Machine selon l'une quelconque des revendications 1 à 7, **caractérisée en ce que** le capteur (52 ; 55) est constitué par une jauge de contrainte.

9. Machine selon l'une quelconque des revendications 1 à 7, **caractérisée en ce que** le capteur (52 ; 55) est constituée par un capteur piézo-électrique.

10. Machine selon l'une quelconque des revendications 1 à 9, **caractérisée en ce que** le capteur (52 ; 55) est monté dans un pont de Wheatstone.

## Patentansprüche

1. Pneumatische Werkzeugmaschine mit einer Teleskopspindel (18), die eine Antriebswelle (28) aufweist, die von einem pneumatischen Motor (14) zu einer Rotationsbewegung angetrieben ist und auf der aufschiebbar eine Hohlwelle (36) montiert ist, mit der ein Werkzeughalter (30) verbunden ist, und die von Steuermitteln (24) zu einer Translationsbewegung angetrieben ist, wobei die Steuermittel einen Schlitten (38) aufweisen, der von einer Förderschraube (42) über ein Gewindemutterelement (40), das von dem Schlitten (38) getragen ist, zu einer Translationsbewegung angetrieben ist, wobei die Förderschraube von einem Elektromotor zu einer Rotationsbewegung angetrieben ist,
**dadurch gekennzeichnet,**
**dass** der Schlitten mit einem Kraftsensor (52; 55) ausgestattet ist, der zum Messen der auf den Werkzeugträger (30) ausgeübten Schubkraft geeignet ist und an eine zentrale Verarbeitungseinheit angeschlossen ist, in der ein Algorithmus zur Verarbeitung des Signals, das von dem Sensor geliefert wird, und zur Überwachung des Vorschubs des von der Spindel getragenen Werkzeugs gespeichert ist.

2. Maschine nach Anspruch 1,
**dadurch gekennzeichnet,**
**dass** der Algorithmus zur Verarbeitung Softwaremittel aufweist zur Berechnung des Unterschieds zwischen dem von dem Sensor (52; 55) gelieferten Signal (S) und einem Schubkraft-Schwellenwert, der einem Minimalwert der während der maschinellen Bearbeitung auf das Werkstück ausgeübten Schubkraft entspricht.

3. Maschine nach Anspruch 2,
**dadurch gekennzeichnet,**
**dass** die Mittel zur Berechnung Mittel zur Erfassung des Fortschritts des Durchbohrens eines Werkstückes während der maschinellen Bearbeitung bilden.

4. Maschine nach Anspruch 3,
**dadurch gekennzeichnet,**
**dass** der Elektromotor ein Schrittmotor ist, und dass sie zusätzlich einen Zähler zum Messen der axialen Verschiebung des Werkzeugs aufweist, wobei die zentrale Verarbeitungseinheit das Anhalten eines Bearbeitungszyklus als Antwort auf die Feststellung eines Endes des Durchbohrens steuert, sobald das Werkzeug nach dem Durchbohren um eine vorbestimmte Distanz vorgerückt ist.

5. Maschine nach einem der Ansprüche 1 bis 4,
**dadurch gekennzeichnet,**
**dass** der Sensor (55) zwischen einem Organ (56) zum Blockieren des Gewindemutterelements (40) auf dem Schlitten (38) und dem Gewindemutterelement (40) montiert ist.

6. Maschine nach einem der Ansprüche 1 bis 4,
**dadurch gekennzeichnet,**
**dass** der Sensor in ein Halteorgan des Gewindemutterelements auf dem Schlitten integriert ist.

7. Maschine nach einem der Ansprüche 1 bis 4,
**dadurch gekennzeichnet,**
**dass** der Sensor (52) zwischen einem Halteorgan (53) und dem Schlitten (38) montiert ist.

8. Maschine nach einem der Ansprüche 1 bis 7,
**dadurch gekennzeichnet,**
**dass** der Sensor (52; 55) von einem Dehnungsmessgerät gebildet ist.

9. Maschine nach einem der Ansprüche 1 bis 7,
**dadurch gekennzeichnet,**
**dass** der Sensor (52; 55) von einem piezo-elektrischen Sensor gebildet ist.

10. Maschine nach einem der Ansprüche 1 bis 9,
**dadurch gekennzeichnet,**
**dass** der Sensor (52; 55) in eine Wheatstone-Brücke eingebaut ist.

## Claims

1. Pneumatic machine tool, comprising a telescopic spindle (18) which comprises a primary shaft (28) which is driven in rotation by a pneumatic motor (14) and on which a hollow shaft (36) is mounted so as to be able to slide, with which shaft (36) a tool carrier (30) is associated and is driven in translation by control means (24) which comprise a carriage (38) which is driven in translation by a worm screw (42) by means of a nut (40) which is carried by the carriage (38), the worm screw being driven in rotation by an electric motor, **characterised in that** the carriage is provided with a force sensor (52; 55) which is adapted in terms of the pushing action applied to the tool carrier (30) and which is connected to a central processing unit in which an algorithm is stored for processing the signal transmitted by the sensor and for controlling the feeding of the tool carried by the spindle.

2. Machine according to claim 1, **characterised in that** the processing algorithm comprises software means for calculating the difference between the signal (S) which is transmitted by the sensor (52; 55) and a pushing action threshold value which corresponds to a minimum value for the pushing action which is applied during the machining of a component.

3. Machine according to claim 2, **characterised in that** the calculation means constitute means for detecting the progress of the drilling of a component being machined.

4. Machine according to claim 3, **characterised in that** the electric motor is an electric step motor, and **in that** the machine further comprises a meter for measuring the axial displacement of the tool, the central processing unit controlling the stopping of a machining cycle in response to the end of a drilling operation being detected, as soon as the tool has advanced by a predetermined distance after the drilling operation.

5. Machine according to any one of claims 1 to 4, **characterised in that** the sensor (55) is mounted between an element (56) for locking the nut (40) on the carriage (38) and the nut (40).

6. Machine according to any one of claims 1 to 4, **characterised in that** the sensor is integrated in an element for retaining the nut on the carriage.

7. Machine according to any one of claims 1 to 4, **characterised in that** the sensor (52) is mounted between a retaining element (53) and the carriage (38).

8. Machine according to any one of claims 1 to 7, **characterised in that** the sensor (52; 55) is constituted by a strain gauge.

9. Machine according to any one of claims 1 to 7, **characterised in that** the sensor (52; 55) is constituted by a piezoelectric sensor.

10. Machine according to any one of claims 1 to 9, **characterised in that** the sensor (52; 55) is mounted in a Wheatstone bridge.
